(19) **Europäisches Patentamt**
**European Patent Office**
**Office européen des brevets**

(11) **EP 1 308 745 B1**

(12) **EUROPÄISCHE PATENTSCHRIFT**

(45) Veröffentlichungstag und Bekanntmachung des Hinweises auf die Patenterteilung:
**27.07.2005 Patentblatt 2005/30**

(51) Int Cl.⁷: $G01S\ 3/808$, $G10K\ 11/34$

(21) Anmeldenummer: **02020287.5**

(22) Anmeldetag: **11.09.2002**

(54) **Verfahren zur passiven Ortung von schallabstrahlenden Zielen**

Method for passive position determination of sound emitting targets

Procédé de localisation passif des cibles rayonnants des ondes sonores

(84) Benannte Vertragsstaaten:
**AT BE BG CH CY CZ DE DK EE ES FI FR GB GR IE IT LI LU MC NL PT SE SK TR**

(30) Priorität: **30.10.2001 DE 10153443**

(43) Veröffentlichungstag der Anmeldung:
**07.05.2003 Patentblatt 2003/19**

(73) Patentinhaber: **ATLAS ELEKTRONIK GmbH 28305 Bremen (DE)**

(72) Erfinder: **Nirmaier, Thomas 69198 Schriesheim (DE)**

(56) Entgegenhaltungen:
**EP-A- 0 288 374        EP-A- 0 962 784
US-A- 5 680 371**

EP 1 308 745 B1

**Beschreibung**

Die Erfindung betrifft ein Verfahren zur passiven Ortung von schallabstrahlenden Zielen der im Oberbegriff des Anspruchs 1 definierten Gattung.

Bei einem bekannten Verfahren dieser Art für eine linienförmige Wandleranordnung mit kontinuierlich belegten Wandlern (DE 198 25 271 C1) werden mittels einer mit den Wandlern verbundenen Peilanlage Ziele gepeilt und der Peilwinkel zu den Zielen bestimmt. Eine Anzahl von benachbarten Wandlern wird zu einer Gruppe zusammengefaßt, und aus den Empfangssignalen bzw. den elektrischen Ausgangssignalen der Wandler der Gruppe werden durch Laufzeit- und/oder Phasenverzögerungen Fokussignale mit Brenn- oder Fokalpunkten gebildet, die auf jedem eine Zielpeilung definierenden Peilstrahl hintereinander aufgereiht sind. Die Fokussignale werden miteinander verglichen und der Fokuspunkt des größten Fokussignals, der durch die Entfernung zur Wandleranordnung bestimmt ist, wird als Ort des Ziels auf dem Peilstrahl angegeben. Als Wandleranordnung wird dabei eine Schleppantenne oder ein sog. Flank-Array verwendet.

Um eine zusätzliche Beruhigung der Anzeige des Zielorts zu erreichen, werden mehrere Gruppen jeweils aus einer Anzahl von Wandlern zu benachbarten Teilbasen zusammengefaßt. Für jede Teilbasis werden Fokussignale mit längs des Peilstrahls in Peilrichtung zum Ziel hintereinander aufgereihten Brennpunkten gebildet. Für jede Teilbasis werden die Fokussignale miteinander verglichen, und aus den Brennpunkten der größten Fokussignale aller Teilbasen werden auf dem zugehörigen Peilstrahl Radialabstände zum Ziel ermittelt. Durch Bilden des Mittelwerts oder des Medians der Radialabstände wird der Ort des Ziels in Peilrichtung bestimmt.

Der Erfindung liegt die Aufgabe zugrunde, ein Verfahren der eingangs genannten Art so zu verbessern, daß es wenig rechenintensiv ist und schnell eine erste Schätzung der Zielentfernung mit brauchbarer Genauigkeit liefert.

Die Aufgabe ist erfindungsgemäß durch die Merkmale im Anspruch 1 gelöst.

Das erfindungsgemäße Verfahren hat den Vorteil, daß es sehr schnell erste Schätzungen der Zielentfernung auch für breitbandige Empfangssignale liefert und bei üblicherweise für die Peilung vorhandenen Beamformern mit geringem Aufwand realisiert werden kann. Durch Zwischenschalten von geeigneten Verzögerungsgliedern zwischen Wandleranordnung und Beamformer erfolgt eine Fokussierung der Wandleranordnung auf die gewählte Fokalpunkte, und die Abhängigkeit des Pegels der so entstehenden Fokussignale von der Entfernung wird genutzt, um die tatsächliche Entfernung zur Schallquelle zu bestimmen.

Durch die Fokussierung der Wandleranordnung auf die Fokalpunkte wird die Krümmung der auf die Wandleranordnung auftreffenden Wellenfront einer vom Fokalpunkt ausgehenden Schallwelle erfaßt, die dem Entfernungskehrwert entspricht. Durch die Einführung virtueller Fokalpunkte, deren zugeordnete, negative Entfernungskehrwerte negativen Krümmungen der Schallwellen entsprechen, die zwar nicht in realiter auftreten, aber wegen der statistischen Natur des Verfahrens für eine erwartungstreue Schätzung berücksichtigt werden, kann ein Pegelverlauf in Abhängigkeit zum Entfernungskehrwert mit einem signifikanten Maximum bei einem solchen Entfernungskehrwert dargestellt werden, der eine Zielentfernung kennzeichnet. Dieser Pegelverlauf läßt sich sehr gut durch eine gerade Funktion, wie z. B. eine Parabel, annähern, die mindestens ein ausgeprägtes und damit genau bestimmbares Maximum besitzt. Dabei reicht die Bestimmung nur weniger Pegel von Fokussignalen bereits aus, um den Pegelverlauf als Funktion des Entfernungskehrwerts, also der Krümmung, in der Umgebung seines Maximums zu approximieren und eine ausreichend zuverlässige Schätzung der Zielentfernung aus dem Entfernungskehrwert des Maximums abzuleiten. Im einfachsten Fall genügen die Pegel von drei der mittels des fokussierenden Beamforming gewonnenen Fokussignale für die Schätzung der Zielentfernung. Da die radiale Beambreite frequenzabhängig ist, ist die Fokussierung auf eine größere Zahl von realen und virtuellen Fokalpunkten vorteilhaft, um Interpolationsfehler zu minimieren. Durch das Heranziehen des Entfernungskehrwerts, also der Krümmung der an der Wandleranordnung einfallenden Wellenfront, können die Ausgangssignale der Wandler statistisch ausgewertet werden, und die Nutzung der statistischen Natur der Meßgrößen ermöglicht auch bei schlechten Signal-Rausch-Bedingungen im Vergleich zu bekannten Verfahren gute Schätzungen der Zielentfernung.

Das erfindungsgemäße Verfahren ist aufgrund seiner kurzen Integrationszeit relativ unempfindliche gegen niedrige zeitliche Kohärenzlängen und durch eine nahezu kontinuierliche Abtastung der Wellenfront durch die dichte Wandlerbelegung unempfindlich gegen niedrige räumliche Kohärenzlängen. Die geringen Anforderungen an die Kohärenz der Schallausbreitung bringen den Vorteil, daß das Verfahren robust gegen eine Reihe von Störungen ist, die durch komplexe Schallausbreitungsbedingungen, z.B. Mehrwegeausbreitung, Temperaturgradienten, Bildung von Schallkanälen und Wasserschichtungen, hervorgerufen werden. Die Fertigung der Wandleranordnung ist sehr einfach, da die Genauigkeit der Erfassung der Wandlerpositionen innerhalb der Wandleranordnung, wie sie bei einer Bestimmung der Zielentfernung durch Korrelation von Empfangssignalen dreier Wandler oder Wandlergruppen gestellt werden (US 4 910 719), bei dem erfindungsgemäßen Verfahren nicht notwendig sind, weil nicht nur drei, sondern viele Punkte auf der empfangenen Wellenfront zur Bestimmung der Zielentfernung herangezogen werden.

Bei dem erfindungsgemäßen Verfahren wird immer die gesamte Länge der Wandleranordnung zum Bilden der Fokalpunkte genutzt, eine Aufteilung der vorhandenen Wandler in einzelne Wandlergruppen unterbleibt, die dadurch erzielte Bündelung der von den Fokussignalen gebildeten Fokuspunkte bringt den Vorteil einer zusätzlichen Störunterdrückung, so daß insbesondere benachbarte Ziele trennbar sind und das Meßergebnis nicht beeinträchtigen.

Zweckmäßige Ausführungsformen des erfindungsgemäßen Verfahrens mit vorteilhaften Weiterbildungen und Ausgestaltungen der Erfindung ergeben sich aus den weiteren Ansprüchen.

Gemäß einer vorteilhaften Ausführungsform der Erfindung wird als gerade Funktion eine Parabel gewählt, mit der eine sehr gute Approximation in der Umgebung des Maximums erzielt wird.

Gemäß einer bevorzugten Ausführungsform der Erfindung wird der dem Maximum zugehörige Entfernungskehrwert als Lösung eines Gleichungssystems von Funktionsgleichungen der geraden Funktion ermittelt, in die jeweils ein Funktionswertepaar aus Pegel und Entfernungskehrwert eingesetzt wird. Im Falle der gewählten Parabel sind die Funktionsgleichungen Scheitelgleichungen der Parabel.

Gemäß einer bevorzugten Ausführungsform der Erfindung werden die Pegel der Fokussignale für den Fokalpunkt mit Entfernungskehrwert Null und für einen realen und einen virtuellen Fokalpunkt mit jeweils betragsmäßig dem gleichen Entfernungskehrwert bestimmt. Diese drei Pegel mit den zugeordneten Entfernungskehrwerten sind ausreichend, um das Gleichungssystem der Scheitelgleichungen zu lösen, wobei der dem Maximum zugehörige Entfernungskehrwert $R_Z^{-1}$ sich errechnet gemäß

$$R_Z^{-1} = \frac{P_1 - P_3}{2(P_1 + P_3 - 2P_2)}R_0^{-1} \, ,$$

wobei $P_2$ der Pegel des dem Entfernungskehrwerts Null zugehörigen Fokussignals, $P_3$ der Pegel des dem Entfernungskehrwert $R_0^{-1}$ zugehörigen Fokussignals und $P_1$ der Pegel des dem negativen Entfernungskehrwert $-R_0^{-1}$ zugehörigen Fokussignals ist. $R_0$ ist dabei die Entfernung eines im Fernfeld der Wandleranordnung beliebig gewählten Fokalpunktes.

Gemäß einer vorteilhaften Ausführungsform der Erfindung wird der Fokalpunkt so gewählt, daß er am Beginn des Fernfelds für die Wandleranordnung liegt. Diese Entfernung $R_0$ errechnet sich als Quotient aus dem Quadrat der Apertur L der Wandleranordnung und der Wellenlänge $\lambda$, also zu $R_0 = L^2/\lambda$.

Die Bestimmung des Entfernungskehrwerts ist aufgrund eines dem Nutzanteil des Fokussignals überlagerten Rauschens mit einem statistischen Fehler behaftet. Versuche haben gezeigt, daß bei einem gemessenen Nutz/Störverhältnis des Fokussignals eine Voraussage über den Verlauf des relativen statistischen Fehlers der Entfernung $\Delta R/R$ über der Frequenz getroffen werden kann, so daß bestimmte Frequenzbereiche zur Optimierung des Ortungsverfahrens bei der vorliegenden Schallausbreitungssituation ausgeschlossen werden können, ohne daß besondere Kenntnisse über das "Sonarwetter" erforderlich sind. Mit einer Weiterbildung des erfindungsgemäßen Verfahrens ist es möglich, Entfernungsbereiche unberücksichtigt zu lassen, wenn dort der statistische Fehler $\Delta R/R$ über einer vorgegebenen Größe liegt.

Nach einer vorteilhaften Weiterbildung der Erfindung ist das Nutz/Störverhältnis des Fokussignals besonders einfach aus dem Nutz/Störverhältnis eines der Emfangssignale der Wandler unter Berücksichtigung eines vorgebbaren Zeit-Bandbreite-Produkts zu berechnen. Zusammen mit der effektiven, peilwinkelabhängigen Länge der Apertur und der Anzahl der Wandler ist damit der relative statistische Fehler mit einer Auswertung des Spektrums nur eines einzigen Empfangssignals möglich.

Besonders vorteilhaft ist es, schon vor der Richtungsbildung und Fokussierung die Empfangssignale der Wandler einer Frequenzanalyse zuzuführen, so daß die drei Pegel der Fokussignale als Funktion des Peilwinkels, des Entfernungskehrwerts und der Frequenz ermittelt werden können. Abhängig vom relativen statistischen Fehler der Entfernung werden die Pegel nur für solche Frequenzbänder ermittelt und ausgewertet, für die der Fehler unterhalb einer vorgebbaren Fehlergrenze liegt. Durch diese frequenzabhängige Vorauswahl sind auch stark verrauschte Empfangssignale, mit einem Nutz/Störverhältnis von z.B. -20 dB auswertbar.

Die Erfindung ist anhand eines in der Zeichnung illustrierten Ausführungsbeispiels im folgenden näher beschrieben. Es zeigen:

Fig. 1    ein Blockschaltbild einer Schaltungsanordnung zur Erläuterung des Verfahrens der passiven Zielortung,

Fig. 2    ein Diagramm des Pegels der einfallenden Schallwelle als Funktion des Entfernungskehrwerts bei einem in 1 km Entfernung angenommenen schallabstrahlenden Ziel,

Fig. 3    ein Diagramm des relativen Pegels als Funktion des Entfernungskehrwerts für eine ausgewählte Wandleranordnung bei einem unter dem Peilwinkel Null in großer Entfernung angenommenen Ziel,

Fig. 4    die mathematische Herleitung der Zeitverzögerung für die Ausgangssignale der Wandler zum Fokussieren der Wandleranordnung auf einen Fokalpunkt in der Entfernung $R_k$ zur Wandleranordnung,

Fig. 5    eine Filteranordnung zum Einfügen in das Blockschaltbild gemäß in Fig. 1,

Fig. 6    ein Spektrum des Nutz/Störverhältnisses"

Fig. 7    einen frequenzabhängigen Verlauf eines relativen statistischen Fehlers der Entfernung.

Bei dem nachfolgend beschriebenen Verfahren zur passiven Ortung von schallabstrahlenden Zielen wird eine Wandleranordnung 10, auch Empfangsantenne genannt, mit voneinander beabstandeten, elektroakustischen Wandlern 11 verwendet. Im Ausführungsbeispiel ist die Wandleranordnung 10 eine Linearantenne mit einer Vielzahl von äquidistant aneinandergereihten Wandlern 11, wie sie z.B. als Schleppantenne (Towed-Array) oder als am Bootskörper befestigte Seitenantenne (Flank-Array), mitunter auch als Bordwandstreamer bezeichnet, bekannt ist. Die Wandleranordnung 10 spannt einen Empfangssektor auf, innerhalb dessen einfallender Schall, der von Ziele bildenden Schallquellen abgestrahlt wird und sich im Wasser ausbreitet, von den Wandlern 11 empfangen wird. Die Wandler 11 sind in herkömmlicher Weise mit einer Peilanlage 13 verbunden, in welcher anhand der elektrischen Ausgangssignale der Wandler 11 - im folgenden Empfangssignale genannt - die Einfallsrichtung des Schalls und damit die Peilrichtung zu den Zielen bestimmt wird. Die Peilanlage 13 umfaßt in bekannter Weise einen Richtungsbildner 14, auch Beamformer genannt, einen Signalverarbeitungblock 15 und einen Pegelmaximumdetektor 16. Im Richtungsbildner 14 werden in bekannter Weise die Empfangssignale der Wandler 11 zeit- oder phasenverzögert, und zwar derart, daß unter Berücksichtigung der gewünschten Einfalls- oder Peilrichtung $\theta_j$ alle Empfangssignale der Wandler 11 konphas sind. Die entsprechenden Verzögerungszeiten $\tau_i$ werden in einem Verzögerungszeitrechner 12 in Abhängigkeit von einem diesen zugeführten Peilwinkel $\theta_j$ generiert. Im Signalverarbeitungsblock 15 werden die in jeder Peilrichtung erhaltenen konphasen Empfangssignale zu einem Gruppensignal addiert, und der Pegel P des Gruppensignals wird in Zuordnung zu der Einfalls- oder Peilrichtung $\theta_j$ abgelegt. Der Pegelmaximumdetektor 16 ermittelt die größten Pegel und gibt die den größten Pegeln der Gruppensignale zugeordneten Peilwinkel $\theta_Z$ als Zielpeilungen aus, die einer Anzeigevorrichtung 17 zugeführt und in dieser numerisch und graphisch dargestellt werden.

Zur Bestimmung der Entfernung eines unter einer Zielpeilung $\theta_Z$ erfaßten Ziels werden die Empfangssignale der Wandler 11 einem sog. fokussierenden Beamforming unterzogen. Hierbei werden die Empfangssignale der Wandler 11 durch definierte Zeit- oder Phasenverzögerungen auf Fokalpunkte fokussiert, die in Peilrichtung hintereinander in unterschiedlichen Entfernungen von der Wandleranordnung 10 angenommen werden.

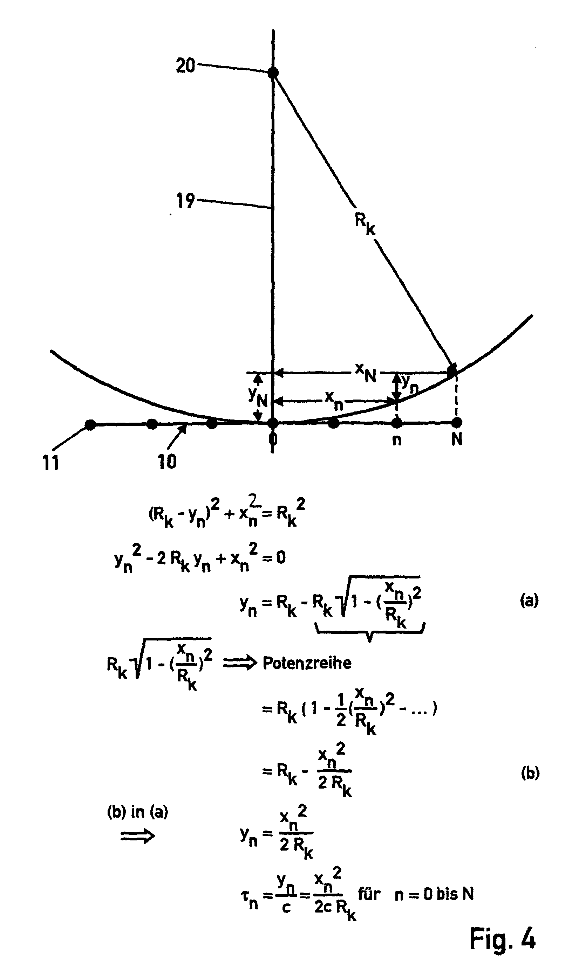

Die Berechnung der erforderlichen Zeitverzögerungen zur Fokussierung der Wandleranordnung 10 auf einen in Peilrichtung 19 angenommenen Fokalpunkt 20 ist in Fig. 4 angegeben. Dabei befindet sich der Fokalpunkt 20 in einer Entfernung $R_k$ von der Mitte der Wandleranordnung 10, und die Wandleranordnung 10 ist als Linear-Array mit n=2N äquidistant angeordneten Wandlern 11 ausgeführt. Bei Abweichungen von der geradlinigen Ausrichtung der Wandler 11 sind entsprechende Korrekturen vorzunehmen. Die Zeitverzögerungen für die Empfangssignale der n Wandler 11 werden aus den Laufzeiten für die Abstände $y_n$ der n Wandler 11 von einem um den Fokalpunkt 20 gezogenen Kreisbogen, dessen Tangente den Mittelpunkt der Wandleranordnung 10 berührt, gewonnen. $x_n$ ist dabei der Abstand des n-ten Wandlers 11 von dem Mittelpunkt der Wandleranordnung 10, und c ist die Schallgeschwindigkeit. Für jeden Fokalpunkt 20 wird die für einen Wandler 11 erforderliche Zeitverzögerung $\tau_n$ gemäß der in Fig. 4 abgeleiteten Gleichung:

$$\tau_n = \frac{x_n^2}{2cR_k} \tag{1}$$

berechnet. Dabei $\frac{1}{R_k} = R_k^{-1}$ der Entfernungskehrwert und entspricht der Krümmung der empfangenen Wellenfront. Von dieser Verzögerung $\tau_n$ wird die für die Wandler 11 mit n=N sich ergebende maximale Zeitverzögerung $\tau_N$ abgezogen, so daß die für den n-ten Wandler 11 tatsächlich erforderliche Verzögerungszeit sich berechnet zu

$$\Delta \tau_n = \frac{1}{2cR_k} (x_n^2 - x_N^2) \tag{2},$$

wobei $x_n$ der Abstand des n-ten Wandlers und $x_N$ der Abstand des äußersten Wandlers 11 jeweils von dem Mittelpunkt der Wandleranordnung 10 ist.

Die Berechnung der Verzögerungszeiten $\Delta\tau_n$ wird für ausgewählte Fokalpunkte mit dem Entfernungskehrwert $R_k^{-1}$ durchgeführt, wobei einem Fokalpunkt der Entfernungskehrwert $R^{-1} = 0$ zugeordnet wird, der Fokalpunkt also im Unendlichen liegt und die Schallwelle mit einer ebenen Wellenfront auf die Wandleranordnung 10 auftrifft, so daß alle Empfangssignale konphas sind und nicht verzögert werden müssen. Das Fokussignal für diesen Fokalpunkt mit $R^{-1}$ = 0 entspricht dem in dem Signalverarbeitungsblock 15 für jeden Peilwinkel $\theta_j$ generierten Gruppensignal. Der Pegel $P_2$ der Gruppensignale wird daher unter Zuordnung des Entfernungskehrwerts "0" unter dem jeweiligen Peilwinkel $\theta_j$ in einem Speicher 21 abgelegt.

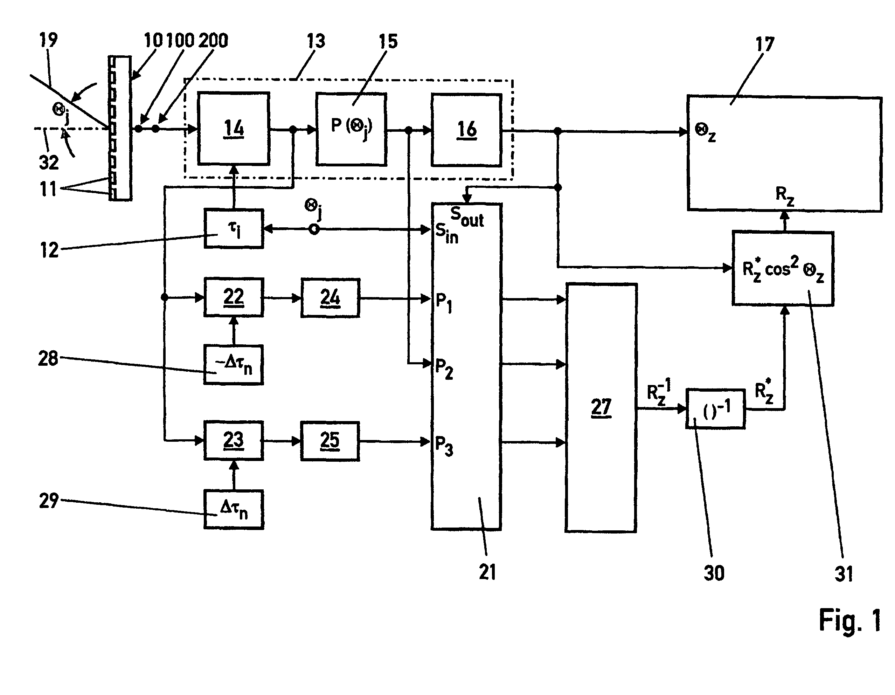

In der jeweiligen Peilrichtung 19 mit dem Peilwinkel $\theta_j$ werden weitere Fokalpunkte in unterschiedlichen Entfernungen $R_k$ zur Wandleranordnung angenommen. Diese Fokalpunkte werden in zwei Gruppen von jeweils realen und virtuellen Fokalpunkten aufgeteilt, wobei den realen Fokalpunkten der einen Gruppe positive Entfernungskehrwerte $R_k^{-1}$ und den virtuellen Fokalpunkten der anderen Gruppe negative Entfernungskehrwerte $-R_k^{-1}$ zugeordnet werden. Im Ausführungsbeispiel der Fig. 1 sind lediglich zwei weitere Fokalpunkte angenommen, und zwar ein realer Fokalpunkt in der Entfernung $R_0$ zur Wandleranordnung 10 und ein virtueller Fokalpunkt, dem der negative Entfernungskehrwert $-R_0^{-1}$ zugeordnet ist. Zur Minimierung des Aufwands und zur Vereinfachung der späteren Berechnung der Zielentfernung sind hier die Entfernungskehrwerte betragsmäßig gleich angenommen, was jedoch nicht zwingend ist. Der Entfernungskehrwert $R_0^{-1}$ entspricht der Krümmung der auf die Wandleranordnung 10 auftreffenden Wellenfront, wenn der Ursprung der Schallwelle in dem Fokalpunkt mit der Entfernung $R_0$ von dem Mittelpunkt der Wandleranordnung 10 angenommen wird. Die negative Krümmung $-R_0^{-1}$, die keiner realen Entfernung entspricht, muß zu einer erwartungstreuen Schätzung der Zielentfernung berücksichtigt werden. Der reale Fokalpunkt wird vorzugsweise so gelegt, daß er am Beginn des Fernfelds für die Wandleranordnung 10 liegt. Ist L die Apertur der Wandleranordnung 10 und $\lambda$ die Wellenlänge im Frequenzband der einfallenden Schallwelle, so berechnet sich die Entfernung $R_0$ des realen Fokalpunktes zu $R_0 = L^2/\lambda$. Entsprechend wird der Entfernungskehrwert des virtuellen Fokalpunktes mit $-R_0^{-1}$ gewählt.

Zur Fokussierung der Wandleranordnung 10 auf die angenommenen realen und virtuellen Fokalpunkten mit dem Entfernungskehrwerten $R_0^{-1}$ und $-R_0^{-1}$ werden die Ausgangssignale des Richtungsbildners 14, also die um die Verzögerungszeiten $\tau_i$ verzögerten Ausgangssignale der Wandler 11, einem ersten fokussierenden Beamformer 22 und einem zweiten fokussierenden Beamformer 23 zugeführt, in denen die Signale um die Verzögerungszeit $-\Delta\tau_n$ bzw. $+\Delta\tau_n$ verzögert werden. Die Verzögerungszeit $\Delta\tau_n$ für jeden Wandler 11 der n-Wandler 11 der Wandleranordnung 10 mit dem Abstand $x_n$ vom Mittelpunkt der Wandleranordnung 10 wird in Abhängigkeit vom Entfernungskehrwert $R_0^{-1}$ bzw. $-R_0^{-1}$ wie vorstehend beschrieben in jeweils einem Verzögerungsrechner 28 bzw. 29 berechnet. Wie schon erwähnt, sind die in den Verzögerungszeitrechnern 28, 29 berechneten Verzögerungszeiten betragsmäßig gleich und unterscheiden sich lediglich durch das Vorzeichen. Die so verzögerten Signale werden einerseits in einem Addierer 24 und andererseits in einem Addierer 25 konphas addiert. Die Pegel $P_1$ bzw. $P_3$ der so gebildeten Fokussignale werden in Zuordnung zu dem Entfernungskehrwert $-R_0^{-1}$ bzw. $+R_0^{-1}$ im Speicher 21 unter dem jeweiligen Peilwinkel $\theta_j$ abgespeichert.

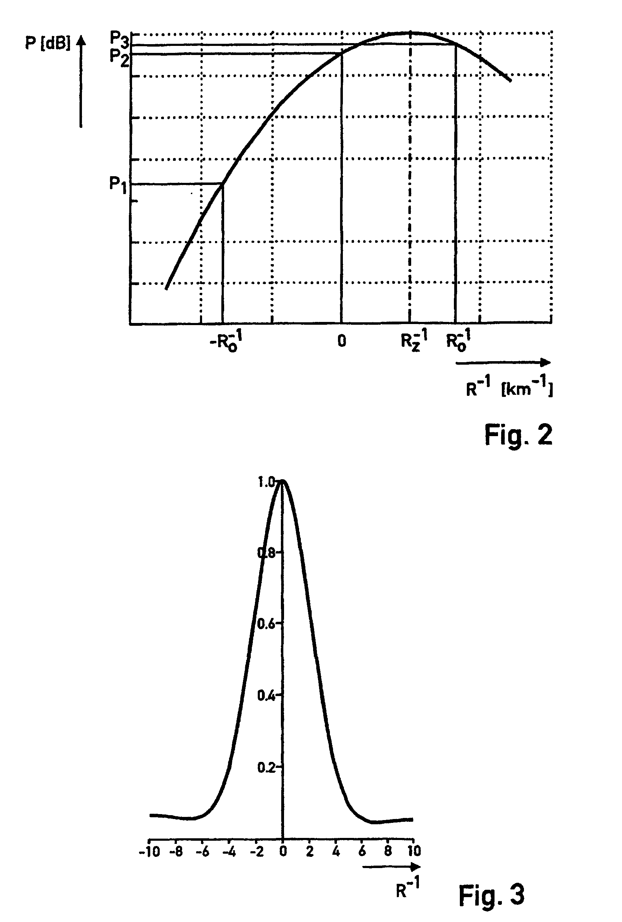

Für eine von der Peilanlage 13 erkannte Zielpeilung mit dem Peilwinkel $\theta_Z$ werden dann die Pegel $P_1$, $P_2$, $P_3$ und die zugeordneten Entfernungskehrwerte $-R_0^{-1}$, 0, $R_0^{-1}$ aus dem Speicher 22 ausgelesen und einem Rechner 27 zugeführt. Im Rechner 27 stehen damit drei Wertepaare von Pegel P und Entfernungskehrwert $R^{-1}$ an, nämlich $P_1/-R_0^{-1}$, $P_2/0$ und $P_3/R_0^{-1}$ an. Diese Wertepaare werden als Funktionswerte einer geraden Funktion, hier eine Parabel, eingesetzt. Diese durch die Wertepaare verlaufende Parabel besitzt ein ausgeprägtes Maximum im Scheitelpunkt, wie dies im Diagramm der Fig. 2 illustriert ist. Der dem Maximum zugehörige Entfernungskehrwert $R_Z^{-1}$ wird bestimmt und nach Kehrwertbildung in einem Kehrwertbildner 30 und nach einer peilwinkelabhängige Korrektur in einem Korrekturglied 31 als Schätzwert der Zielentfernung an die Anzeigeeinheit 17 ausgegeben und dort als Zielentfernung $R_Z$ angezeigt.

Im Rechner 27 wird der dem Funktionsmaximum zugehörige Entfernungskehrwert $R_Z^{-1}$ durch Lösung eines Gleichungssystems aus drei Funktionsgleichungen ermittelt, wobei in jede Funktionsgleichung ein Wertepaar $R^{-1}$, P eingesetzt wird. Als Funktionsgleichung wird dabei die Scheitelgleichung

$$P = -k\,(R^{-1} - R_Z^{-1})^2 + d \qquad (3)$$

der Parabel verwendet, wobei k die Aufweitung der Parabel bestimmt und $R_Z^{-1}$, d die Koordinaten des Scheitelpunkts sind. Mit den drei bestimmten Wertepaaren $-R_0^{-1}$, $P_1$; 0, $P_2$ und $R_0^{-1}$, $P_3$ ergibt sich das Gleichungssystem

$$P_1 = -k(-R_0^{-1} + R_Z^{-1})^2 + d$$

$$P_2 = -kR_Z^{-2} + d \qquad (4).$$

$$P_3 = -k(R_0^{-1} + R_Z^{-1})^2 + d$$

Dessen Lösung ist:

$$R_z^{-1} = \frac{P_1 - P_3}{2(P_1 + P_3 - 2P_2)} \cdot R_0^{-1} \tag{5}.$$

Die im Ausführungsbeispiel gewählte Parabel als gerade Funktion kann selbstverständlich auch durch eine Taylorentwicklung 2. Ordnung des Pegels P nach dem Entfernungskehrwert $R^{-1}$ approximiert werden gemäß

$$P\left(R^{-1}\right) = P\left(R_z^{-1}\right) + \frac{P'\left(R_z^{-1}\right)}{1!}\left(R^{-1} - R_z^{-1}\right) + \frac{P''\left(R_z^{-1}\right)}{2!}\left(R^{-1} - R_z^{-1}\right)^2 + .. \quad (6),$$

wobei sich mit den drei Funktionswertepaaren $R^{-1}$,P ein Gleichungssystem aus drei Gleichungen ergibt, welches als Lösung ebenfalls den unter Gl. (5) angegebenen Entfernungskehrwert $R_Z^{-1}$ liefert. P' und P" sind dabei die erste und zweite Ableitung der Funktion des Pegelverlaufs $P(R^{-1})$ in Abhängigkeit vom Entfernungskehrwert $R^{-1}$.

Die Bestimmung des Entfernungskehrwerts ist aufgrund eines dem Nutzanteil des Fokussignals überlagerten Rauschens mit einem statistischen Fehler behaftet. Das entfernungsabhängige Fokussignal wird für unterschiedliche Entfernungen jeweils durch eine Summe von verzögerten Ausgangs- oder Empfangssignalen der Wandler der Wandleranordnung gebildet. Der entfernungsabhängige Pegelverlauf des Fokussignals ist eine Summe aus Cosinusfunktionen, die über eine Reihenentwicklung für kleine Argumente des Cosinus eine quadratische Abhängigkeit vom Entfernungskehrwert zeigt

$$P(R^{-1}) = P_0\left[1 - \frac{\pi^2 f^2 L^4}{80c^2}\frac{1}{R^2}\right] \qquad \text{I}$$

dabei ist $P_0$ die Amplitude des Fokussignals $P(R^{-1})$, $R^{-1}$ der Entfernungswert, f die Frequenz, L die Länge der Wandleranordnung und c die Schallgeschwindigkeit. Die zum Bestimmen der drei Pegel der Fokussignale $P_1(-R_0^{-1}$, $P_Z$ (0), $P_3$ (+$R_0^{-1}$) verwendete Integrationszeit ist endlich, so daß der Amplitude $P_0$ des Pegelverlaufs eine Rauschamplitude überlagert ist, die einen statistischen Fehler in der Bestimmung der Abszisse des Pegelmaximums und somit bei der Bestimmung des Entfernungskehrwerts erzeugt.

Da die Entfernung erfindungsgemäß über den Entfernungskehrwert $R^{-1}$ bestimmt wird, wird dieser Fehler im quadratischen Term des Entfernungskehrwerts berücksichtigt. Das Fokussignal kann im Fernfeld durch ein Polynom zweiter Ordnung angenähert werden, wobei der Entfernungskehrwert $R^{-1}$ durch die Krümmung K ersetzt wird. Dadurch bestimmt sich das mit einer Rauschamplitude überlagerte Fokussignal wie folgt:

$$P(K) = P_0\left[1 - a(K - K_0)^2\right] \qquad \text{II}$$

mit

$$a = \frac{\pi f^2 L^2}{80c^2},$$

(K - $K_0$) ist die durch das Rauschen verursachte Störung der Krümmung der Wellenfront, also der statistische Fehler $\Delta K$ der Krümmung. Setzt man für K - $K_0 = \Delta K$, so erhält man nach Umformung

$$P(K) - P_0 = P_0\, a\, (K - K_0)^2 \qquad\qquad \text{III}$$

$$\Delta P = P_0\, a\, \Delta K^2, \qquad\qquad \text{IV}$$

wobei $\Delta P = P(K) - P_0$ die statistische Störung des Fokussignals angibt. Löst man Gleichung IV nach $\Delta K^2$ auf, so erhält man

$$\Delta K^2 = \frac{1}{a\,\dfrac{P_0}{\Delta P}}, \qquad\qquad \text{V}$$

dabei ist $P_0/\Delta P$ das Nutz/Störverhältnis $SNR_B$ des Fokussignals.

Der Fehler $\Delta K$ der Krümmung ist also gleich

$$\Delta K = \frac{1}{\sqrt{a\,SNR_B}} \qquad\qquad \text{VI}$$

Mit $K = R^{-1}$ und der Annahme daß R die tatsächliche Entfernung und $R_Z$ die fehlerbehaftet bestimmte Entfernung ist, erhält man die Störung der Krümmung $\Delta K$

$$\Delta K = K - K_0 = \frac{1}{R_Z} - \frac{1}{R} = \frac{R - R_Z}{R_Z\,R} \qquad\qquad \text{VII}$$

Für $\Delta R = R_0 - R$ ist der relative statistische Fehler der Entfernung gleich

$$\frac{\Delta R}{R} = \frac{4\sqrt{5}\,c}{\pi f L^2 \sqrt{SNR_B}}\,R \qquad\qquad \text{VIII}$$

Der relative statistische Fehler des Entfernungswerts ist eine Funktion der Entfernung, die mit steigender Frequenz f fällt und umgekehrt proportional dem radizierten Nutz/Störverhältnis $SNR_B$ des Fokussignals ist, das ebenfalls frequenzabhängig ist.

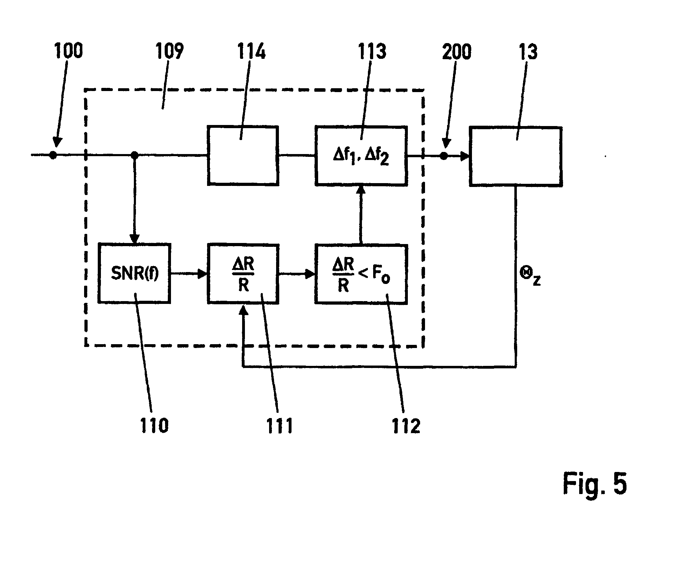

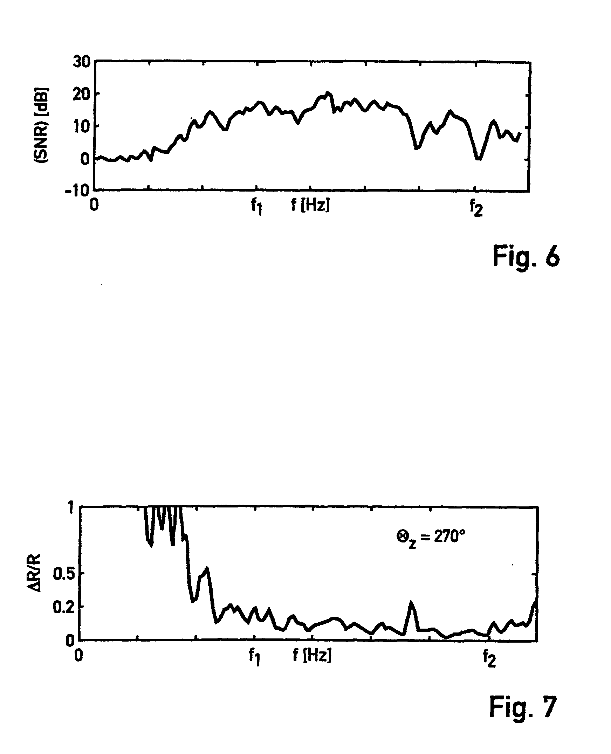

Zur Bestimmung des relativen statistischen Fehlers $\Delta R/R$ und zur Verbesserung der Entfernungsschätzung wird zwischen die Punkte 100 und 200 vor dem Eingang des Richtungsbildners 14 wahlweise eine Filteranordnung 109 für die Empfangssignale der Wandler 11 geschaltet, die in Fig. 5 dargestellt ist. Von einem der Empfangssignale der Wandler 11 wird in einer Rechenschaltung 110 das Nutz/Störverhältnis bestimmt und mit einem vorgebbaren Zeit-Bandbreite-Produkt, das die Integrationszeit für die Pegelbestimmung des Fokussignals berücksichtigt, sowie der Anzahl der Wandler 11 multipliziert. Die Rechnerschaltung 110 liefert das frequenzabhängige Nutz/Störverhältnis $SNR_B$ des Fokussignals, dessen Verlauf in Fig. 6 über der Frequenz als Spektrum gezeigt ist. In der nachgeordneten Fehlerberechnungschaltung 111 wird der relative statistische Fehler der Entfernung

$$\frac{\Delta R}{R} = R\,\frac{4\sqrt{5}\,c}{\pi f L^2 \sqrt{SNR_B}} \qquad\qquad \text{VIII}$$

berechnet, wobei c die Schallgeschwindigkeit, f die Frequenz, L die Länge der effektiven Apertur, die abhängig vom Peilwinkel $\theta_Z$ ist, und $SNR_B$ das Nutz/Störverhältnis des Fokussignals ist. Die Fehlerberechnungsschaltung 111 wird vom Peilwinkel $\theta_j$ angesteuert, den die Peilanlage 13 liefert.

Den Verlauf des relativen statistischen Fehlers der Entfernung $\Delta R/R$ zeigt Fig. 7, der eine starke Frequenzabhängigkeit deutlich macht. Die geringsten Fehler treten im Frequenzbereich vom f1 bis f2 auf und liegen unter einer vorgebbaren Fehlergrenze von z.B. 0,2. Über eine Steuerschaltung 112 wird eine Frequenzauswahlschaltung 113 angesteuert, die Empfangssignale aus einer Frequenzanalyseschaltung 114 in diesem Frequenzbereich f1 bis f2 oder

in einzelnen Frequenzbändern $\Delta$f1, $\Delta$f2 dieses Frequenzbereichs f1 bis f2 über den Punkt 200 an die Peilanlage 13 in Fig. 1 durchschaltet. Mit dieser Maßnahme wird erreicht, daß der relative statistische Fehler für die aus den Pegeln der Fokussignale $P_1(-R_0^{-1})$, $P_Z(0)$, $P_3(+R_0^{-1})$ ermittelten Zielentfernung $R_Z$ beispielsweise unter 2 % liegt.

Der dem Maximum zugehörige Entfernungskehrwert $R_Z^{-1}$ am Ausgang des Rechners 27 in Fig. 1 wird im Kehrwertbildner 30 invertiert. Der so entstehende Schätzwert $R_Z^*$ ist der Schätzwert der Zielentfernung nur für den Fall, daß die Peilrichtung $\theta_Z$, unter dem das Ziel gepeilt worden ist, mit der Normalen 32 in der Mitte der Wandleranordnung 10 zusammenfällt, der Peilwinkel $\theta_Z$ also 0° beträgt. Ist das Ziel unter einem Peilwinkel $\theta_Z$ größer als Null gepeilt worden, so muß der Schätzwert $R_Z^*$ der Zielentfernung noch peilwinkelabhängig korrigiert werden, da bei nicht senkrechtem Schalleinfall sich die effektive Arraylänge L um den Faktor cos $\theta_Z$ verkürzt. Da die Beziehung gilt

$$R = \frac{(L \cdot \cos \theta_Z)^2}{8c \cdot \tau} \tag{7},$$

wobei $\tau$ die Laufzeitdifferenz der Schallwelle mit gekrümmter Wellenfront zwischen Mitte und Ende der Wandleranordnung 10 ist, wird in einem Korrekturglied 31 der Schätzwert der Zielentfernung $R_Z^*$ mit dem Quadrat des Cosinus des Peilwinkels $\theta_Z$ multipliziert und das Ergebnis als der wahre Schätzwert für die Zielentfernung $R_Z$ an die Anzeigeeinheit 17 gegeben.

Im beschriebenen Ausführungsbeispiel des Verfahrens sind zur Approximation der Parabel nur drei Funktionswertepaare entsprechend den drei gewählten Fokalpunkten verwendet worden. Da die radiale Beambreite frequenzabhängig ist, ist es bei einer breitbandigen Auswertung der Empfangssignale jedoch vorteilhaft eine größere Anzahl von Fokalpunkten, z.B. sieben, anzunehmen, um Interpolationsfehler zu minimieren. Für Zielentfernungen ab 1 km können z.B. folgende Entfernungskehrwerte für die Fokalpunkte angenommen werden: -1,5km$^{-1}$; -1km$^{-1}$; -0,5km$^{-1}$; 0km$^{-1}$; 0,5km$^{-1}$; 1km$^{-1}$; 1,5km$^{-1}$.

Für die Approximierung des Pegelverlaufs in Nähe der Maximumumgebung mit mindestens drei Funktionswertepaaren $R^{-1}$, P kann anstelle einer Parabel auch eine andere gerade Funktion y=f(x) verwendet werden, die sich durch ihren symmetrischen Verlauf bezüglich des Funktionsmaximums auszeichnet und im Definitionsbereich von x die Bedingung f(-x)=f(+x) erfüllt, wie z.B. eine cos-Funktion, wenn die Funktion mit ihrer Maximumumgebung nur annähernd den tatsächlichen Pegelverlauf in Abhängigkeit von dem Entfernungskehrwert $R^{-1}$ in Zielnähe nachbildet. In Fig. 3 ist für eine als Linearantenne ausgebildete Wandleranordnung 10 von 30m Länge mit 96 Wandlern 11 der relative Pegel bei einem Frequenzband 1 - 2 kHz über den Kehrwert $R^{-1}$ der Entfernung zu einer im Unendlichen liegenden Schallquelle aufgetragen, wie er durch die beschriebenen Fokussierung der Wandleranordnung 10 auf eine Vielzahl von in Peilrichtung 19 hintereinander liegend angenommenen Fokalpunkten unterschiedlicher Entfernung zu der Wandleranordnung 10 und durch Bestimmen der Pegel der so erhaltenen Fokussignale in Zuordnung zu den Entfernungskehrwerten $R^{-1}$ der Fokalpunkte erhalten wird. Wie aus Fig. 3 erkennbar ist, entspricht der Pegelverlauf in der Umgebung des Funktionsmaximums, das die Lage des Ziel angibt, einer Parabelfunktion, so daß für eine solche Linearantenne die Verwendung einer Parabel zur Ermittlung der Schätzwerte für die Zielentfernung nach dem vorstehend beschriebenen Verfahren die größte Genauigkeit liefert.

Das erfindungsgemäße Verfahren ist nicht auf das vorstehend beschriebene Ausführungsbeispiel beschränkt. So kann als Wandleranordnung eine beliebige Empfangsantenne verwendet werden, wenn die Apertur der Antenne genügend groß ist, um die gewünschte Auflösung zu erreichen. Bei Verwendung einer zweidimensional ausgedehnten Wandleranordnung, einem sog. Flächen-Array, können Ziele nicht nur in dem von der Wandleranordnung bzw. der Empfangsantenne in der Horizontalen aufgespannten Empfangssektor sondern auch in einem dreidimensionalen Raumsektor detektiert und geortet werden. Der gleiche Signalverarbeitungsvorgang, wie er für ein in der Horizontalebene sich erstreckendes Linear-Array beschrieben worden ist, muß dann mit den Empfangssignalen von in der Vertikalrichtung übereinandergereihten Wandlern durchgeführt werden.

Die Signalverarbeitung kann sowohl mit analogen als auch mit digitalen Signalen durchgeführt werden. Liegen die Signale in zeitdiskreter Form mit der Samplingfrequenz $f_s$ vor, so wird aus den Laufzeitdifferenzen zur Verzögerung der Empfangssignale die Anzahl der Samples berechnet, um die das gesampelte Signal verzögert werden muß. Nach der Verzögerung werden alle Empfangssignale ebenfalls addiert, so daß durch die konphase Addition der aus der gleichen Einfallsrichtung stammenden Schallwellen die fokussierende Wirkung des Verfahrens erzielt wird.

Zur Bestimmung des Pegels der Fokussignale wird die Energie der Fokussignale herangezogen. Selbstverständlich kann auch die Leistung oder die Amplitude der Fokussignale als Maß für den Pegel verwendet werden.

**Patentansprüche**

**1.**  Verfahren zur passiven Ortung von schallabstrahlenden Zielen durch Bestimmen eines Peilwinkels zum Ziel und einer Zielentfernung unter Verwendung einer einen Empfangssektor aufspannenden Wandleranordnung (10) mit voneinander beabstandeten, elektroakustischen Wandlern (11), bei dem die Wandleranordnung (10) durch definierte Phasenverschiebungen und/oder Zeitverzögerung ihrer Empfangssignale auf in Peilrichtung hintereinander in unterschiedlichen Entfernungen von der Wandleranordnung angenommene Fokalpunkte fokussiert wird und durch konphase Addition der verzögerten Empfangssignale den Fokalpunkten zugeordnete Fokussignale gebildet werden, **dadurch gekennzeichnet, daß** die Fokussignale für eine Anzahl von Fokalpunkten gebildet werden, von denen einer den Entfernungskehrwert Null aufweist und die anderen in zwei Gruppen von jeweils realen und virtuellen Fokalpunkten so aufgeteilt werden, daß den realen Fokalpunkten der einen Gruppe positive Entfernungskehrwerte ($R_k^{-1}$) und den virtuellen Fokalpunkten der anderen Gruppe negative Entfernungskehrwerte ($-R_k^{-1}$) zugeordnet sind, daß die Pegel (P) der Fokussignale und die zugehörigen Entfernungskehrwerte ($R^{-1}, -R^{-1}$) als Funktionswerte in eine gerade Funktion eingesetzt werden und daß der dem Maximum der geraden Funktion zugehörige Entfernungskehrwert ($R_Z^{-1}$) nach Kehrwertbildung und peilwinkelabhängiger Korrektur als Schätzwert der Zielentfernung ($R_Z$) ausgegeben wird.

2. Verfahren nach Anspruch 1, **dadurch gekennzeichnet, daß** die gerade Funktion durch eine Taylorentwicklung nach dem Entfernungskehrwert approximiert wird.

3. Verfahren nach Anspruch 1 oder 2, **dadurch gekennzeichnet, daß** als gerade Funktion eine Parabel gewählt wird.

4. Verfahren nach Anspruch 2 oder 3, **dadurch gekennzeichnet, daß** der dem Maximum zugehörige Entfernungskehrwert als Lösung eines Gleichungssystems von Funktionsgleichungen der geraden Funktion ermittelt wird, in die jeweils ein Funktionswertepaar aus Pegel und Entfernungskehrwert eingesetzt wird.

5. Verfahren nach Anspruch 3 oder 4, **dadurch gekennzeichnet, daß** als Funktionsgleichung die Scheitelgleichung einer Parabel verwendet wird.

6. Verfahren nach einem der Ansprüche 1 - 5, **dadurch gekennzeichnet, daß** zu jedem realen Fokalpunkt der einen Gruppe in der anderen Gruppe ein virtueller Fokalpunkt mit betragsmäßig gleichem Entfernungskehrwert vorgehalten wird.

7. Verfahren nach Anspruch 6, **dadurch gekennzeichnet, daß** jeder Gruppe nur ein Fokalpunkt zugewiesen wird.

8. Verfahren nach Anspruch 5, 6 und 7, **dadurch gekennzeichnet, daß** der dem Maximum zugehörige Entfernungskehrwert $R_Z^{-1}$ aus den Pegeln ($P_1, P_2, P_3$) der drei Fokussignale gemäß

$$R_Z^{-1} = \frac{P_1 - P_3}{2(P_1 + P_3 - 2P_2)} R_0^{-1}$$

berechnet wird, wobei $P_2$ der Pegel des dem Entfernungskehrwert Null zugehörigen Fokussignals, $P_3$ der Pegel des dem Entfernungskehrwert $R_0^{-1}$ zugehörigen Fokussignals und $P_1$ der Pegel des dem negativen Entfernungskehrwert $-R_0^{-1}$ zugehörigen Fokussignals und $R_0$ die Entfernung eines im Fernfeld der Wandleranordnung (10) beliebig gewählten Fokalpunktes ist.

9. Verfahren nach Anspruch 7 oder 8, **dadurch gekennzeichnet, daß** die Entfernung des realen Fokalpunkts in der einen Gruppe so gewählt wird, daß er am Beginn des Fernfelds für die Wandleranordnung (10) liegt.

10. Verfahren nach Anspruch 9, **dadurch gekennzeichnet, daß** die gewählte Entfernung $R_0$ als Quotient aus dem Quadrat der Apertur L der Wandleranordnung und der Wellenlänge λ zu

$$R_0 = L^2/\lambda$$

berechnet wird.

11. Verfahren nach einem der Ansprüche 1 - 10, **dadurch gekennzeichnet, daß** zur peilwinkelabhängigen Korrektur der Zielentfernung ($R_Z$) bei um einen Peilwinkel ($\theta_Z$) gegenüber der Normalen (32) der Wandleranordnung (10) geschwenkter Peilrichtung (19) der Kehrwert ($R_Z^*$) des dem Maximum zugehörigen Entfernungskehrwerts ($R_Z^{-1}$)

mit dem Quadrat des Cosinus des Peilwinkels ($\theta_Z$) multipliziert wird.

**12.** Verfahren nach Anspruch 9, **dadurch gekennzeichnet, daß** der Peilwinkel ($\theta_Z$) mittels einer Peilanlage (13) bestimmt wird.

**13.** Verfahren nach einem der Ansprüche 1 - 12, **dadurch gekennzeichnet, daß** bei Verwendung einer linienförmigen Wandleranordnung (10) die Zeitverzögerungen ($\Delta\tau_n$) für die Empfangssignale der Wandler (11) zur Fokussierung auf die Fokalpunkte aus der Berechnung der Laufzeiten $\tau_n$ für die Abstände ($y_n$) der Wandler (11) von einem um den jeweiligen Fokalpunkt (20) gezogenen Kreisbogen, dessen Tangente den Mittelpunkt der Wandleranordnung (10) berührt, gemäß

$$\tau_n = \frac{x_n^2}{2c \cdot R_k}$$

gewonnen werden, wobei $x_n$ der Abstand des n-ten Wandlers von dem Mittelpunkt der Wandleranordnung (10), $R_k$ der Entfernungswert des k-ten Fokalpunktes (20) und c die Schallgeschwindigkeit ist.

**14.** Verfahren nach Anspruch 13, **dadurch gekennzeichnet, daß** zur Fokussierung der Wandleranordnung (10) auf die virtuellen Fokalpunkte die Empfangssignale der Wandler (11) betragsmäßig gleichen Zeitverzögerungen ($\Delta\tau_n$) mit umgekehrtem Vorzeichen unterworfen werden.

**15.** Verfahren nach einem der Ansprüche 1 - 14, **dadurch gekennzeichnet, daß** ein statistischer Fehler ($\Delta K$) des Entfernungskehrwerts ($R^{-1}$) aus dem Nutz/Störverhältnis ($SNR_B$) des Fokussignals für den realen Fokalpunkt geschätzt wird und daraus ein frequenzabhängiger, relativer statistischer Fehler ($\Delta R/R$) der Zielentfernung (R) ermittelt wird.

**16.** Verfahren nach Anspruch 15, **dadurch gekennzeichnet, daß** der relative statistische Fehler ($\Delta R/R$) der Zielentfernung (R) umgekehrt proportional abhängig von der Frequenz (f) und der Wurzel des NutzStörverhältnisses ($SNR_B$) des Fokussignals ermittelt wird.

**17.** Verfahren nach Anspruch 15 oder 16, **dadurch gekennzeichnet, daß** unter Berücksichtigung ihrer Anzahl (n) und einer peilwinkelabhängigen Aperturlänge (L) der zur Fokussierung herangezogenen Wandler (11) das Nutz/Störverhältnis ($SNR_B$) des Fokussignals aus dem Nutz/Störverhältnis (SNR) eines Empfangssignals am Wandler (11) multipliziert mit einem vorgebbaren Zeit-Bandbreite-Produkt ermittelt wird.

**18.** Verfahren nach einem der Ansprüche 15 - 17, **dadurch gekennzeichnet, daß** ein oder mehrere Frequenzbänder abhängig vom Verlauf des relativen statistischen Fehlers ($\Delta R/R$) ausgewählt werden, für die der Fehler ($\Delta R/R$) kleiner als eine vorgebbare Fehlergrenze ist, und daß dafür die Pegel (P) der Fokussignale ermittelt werden.

**Claims**

**1.** Method for passive location of sound-emitting targets by means of determining a direction angle to the target and a target range, and by the use of a transducer arrangement (10) defining a receiving sector and having mutually spaced, electroacoustic transducers (11), in the case of which the transducer arrangement (10) is focused by means of a defined phase shift and/or time delay of its received signals onto assumed focal points sequentially in the bearing direction at different ranges from the transducer arrangement, and focusing signals assigned to the focal points (20) are formed by in-phase addition of the delayed received signals, **characterized in that** the focusing signals are formed for a number of focal points of which one has the range reciprocal zero and the others are split into two groups of in each case real and virtual focal points such that the real focal points of one group are assigned positive range reciprocals ($R_k^{-1}$), and the virtual focal points of the other group are assigned negative range reciprocals ($-R_k^{-1}$), **in that** the levels (P) of the focusing signals and the associated range reciprocals ($R^{-1}, -R^{-1}$) are substituted as functional values in an even function, and **in that** the range reciprocal ($R_z^{-1}$) associated with the maximum of the even function is output as estimated value of the target range ($R_z$) after formation of the reciprocal and correction as a function of direction angle.

**2.** Method according to Claim 1, **characterized in that** the even function is approximated by a Taylor expansion in terms of the range reciprocal.

3. Method according to Claim 1 or 2, **characterized in that** a parabola is selected as even function.

4. Method according to Claim 2 or 3, **characterized in that** the range reciprocal associated with the maximum is determined as solution of a system of functional equations of the even function in which in each case a pair of functional values composed of level and range reciprocal are substituted.

5. Method according to Claim 3 or 4, **characterized in that** the vertex equation of a parabola is used as functional equation.

6. Method according to one of Claims 1 - 5, **characterized in that** for each real focal point of one group a virtual focal point with a range reciprocal of the same magnitude is reserved in the other group.

7. Method according to Claim 6, **characterized in that** each group is allocated only one focal point.

8. Method according to Claims 5, 6 and 7, **characterized in that** the range reciprocal $R_z^{-1}$ associated with the maximum is calculated from the levels ($P_1$, $P_2$, $P_3$) of the three focusing signals in accordance with

$$R_z^{-1} = \frac{P_1 - P_3}{2(P_1 + P_3 - 2P_2)} R_o^{-1},$$

$P_2$ being the level of the focusing signal associated with the range reciprocal zero, $P_3$ being the level of the focusing signal associated with the range reciprocal $R_0^{-1}$, and $P_1$ being the level of the focusing signal associated with the negative range reciprocal $-R_0^{-1}$, and $R_0$ being the range of a focal point arbitrarily selected in the far field of the transducer arrangement (10).

9. Method according to Claim 7 or 8, **characterized in that** the range of the real focal point in one group is selected such that it lies at the beginning of the far field for the transducer arrangement (10).

10. Method according to Claim 9, **characterized in that** the selected range $R_0$ is calculated as the quotient of the square of the aperture L of the transducer arrangement and the wavelength $\lambda$ as

$$R_0 = L^2/\lambda.$$

11. Method according to one of Claims 1 - 10, **characterized in that**, in order to correct the target range ($R_z$) as a function of direction angle, given a bearing direction (19) swivelled by a direction angle ($\theta_z$) with respect to the normal (32) to the transducer arrangement (10), the reciprocal ($R_z^*$) of the range reciprocal ($R_z^{-1}$) associated with the maximum is multiplied by the square of the cosine of the direction angle ($\theta_z$).

12. Method according to Claim 9, **characterized in that** the direction angle ($\theta_z$) is determined by means of a direction-finding system (13).

13. Method according to one of Claims 1 - 12, **characterized in that**, given the use of a linear transducer arrangement (10), the time delays ($\Delta\tau_n$) for the received signals of the transducers (11) for focusing onto the focal points are obtained from the calculation of the delay times $\tau_n$ for the spacings $y_n$ of the transducers (11) from a circular arc drawn about the respective focal point (20) and whose tangent touches the midpoint of the transducer arrangement (10), in accordance with

$$\tau_n = \frac{x_n^2}{2c \cdot R_k},$$

$x_n$ being the spacing of the nth transducer from the midpoint of the transducer arrangement (10), $\frac{1}{R_k}$ being the reciprocal of the kth focal point (20), and c being the speed of sound.

**14.** Method according to Claim 13, **characterized in that** in order to focus the transducer arrangement (10) onto the virtual focal points, the received signals of the transducers (11) are subjected to time delays ($\Delta\tau_n$) of equal magnitude and inverse sign.

**15.** Method according to one of Claims 1 - 14, **characterized in that** a statistical error ($\Delta K$) of the range reciprocal ($R^{-1}$) is estimated from the signal-to-noise ratio ($SNR_B$) of the focusing signal for the real focal point, and a frequency-dependent, relative statistical error ($\Delta R/R$) of the target range (R) is determined therefrom.

**16.** Method according to Claim 15, **characterized in that** relative statistic error ($\Delta R/R$) of the target range (R) is determined in an inversely proportional fashion as a function of the frequency (f) and the root of the signal-to-noise ratio ($SNR_B$) of the focusing signal.

**17.** Method according to Claim 15 or 16, **characterized in that** the signal-to-noise ratio ($SNR_B$) of the focusing signal is determined from the signal-to-noise ratio (SNR) of a received signal at the transducer (11) multiplied by a prescribable time-bandwidth product by taking account of their number (n) and an aperture length (L), dependent on direction angle, of the transducers (11) used for focusing.

**18.** Method according to one of Claims 15 - 17, **characterized in that** there are selected as a function of the profile of the relative statistical error ($\Delta R/R$) one or more frequency bands for which the error ($\Delta R/R$) is smaller than a prescribable error limit, and **in that** the level (P) of the focusing signals is determined therefor.

**Revendications**

**1.** Procédé de localisation passive de cibles émettant du son par la détermination d'un angle de relèvement par rapport à la cible et d'un éloignement de la cible, en utilisant un ensemble (10) de transducteurs déterminant un secteur de réception et comportant des transducteurs électroacoustiques (11) mutuellement distants, procédé selon lequel l'ensemble (10) de transducteurs est, par des déphasages et/ou temporisations défini(e)s de ses signaux de réception, focalisé sur des points focaux pris les uns à la suite des autres dans la direction de relèvement à des distances différentes de l'ensemble de transducteurs, et des signaux de foyer associés aux points focaux sont formés par addition en phase des signaux de réception différés, **caractérisé en ce qu'**on forme les signaux de foyer pour un certain nombre de points focaux dont l'un présente une valeur inverse de distance nulle et dont les autres sont répartis en deux groupes de points focaux respectivement réels et virtuels de telle sorte que des valeurs inverses de distance positives ($R_k^{-1}$) sont associées aux points focaux réels du premier groupe et des valeurs inverses de distance négatives ($-R_k^{-1}$) sont associées aux points focaux virtuels de l'autre groupe, **en ce qu'**on utilise comme valeurs fonctionnelles dans une fonction paire les niveaux (P) des signaux de foyer et les valeurs inverses de distance associées ($R^{-1}$, $-R^{-1}$), et **en ce qu'**on édite comme valeur estimée de l'éloignement ($R_z$) de la cible la valeur inverse de distance ($R_z^{-1}$) associée au maximum de la fonction paire, après formation de la valeur inverse et correction en fonction de l'angle de relèvement.

**2.** Procédé selon la revendication 1, **caractérisé en ce que** la fonction paire est approchée par un développement de Taylor d'après la valeur inverse de distance.

**3.** Procédé selon la revendication 1 ou 2, **caractérisé en ce qu'**on choisit comme fonction paire une parabole.

**4.** Procédé selon la revendication 2 ou 3, **caractérisé en ce qu'**on détermine la valeur inverse de distance associée au maximum en tant que solution d'un système d'équations fonctionnelles de la fonction paire dans lesquelles on utilise chaque fois une paire de valeurs fonctionnelles constituée du niveau et de la valeur inverse de distance.

**5.** Procédé selon la revendication 3 ou 4, **caractérisé en ce qu'**on utilise comme équation fonctionnelle l'équation au sommet d'une parabole.

**6.** Procédé selon l'une quelconque des revendications 1 à 5, **caractérisé en ce que**, pour chaque point focal réel du premier groupe, on réserve dans l'autre groupe un point focal virtuel ayant une valeur inverse de distance de même montant.

**7.** Procédé selon la revendication 6, **caractérisé en ce qu'**un seul point focal est affecté à chaque groupe.

**8.** Procédé selon les revendications 5, 6 et 7, **caractérisé en ce qu'**on calcule la valeur inverse de distance ($R_z^{-1}$) associée au maximum, à partir des niveaux ($P_1$, $P_2$, $P_3$) des trois signaux de foyer, conformément à l'équation suivante

$$R_z^{-1} = \frac{P_1 - P_3}{2(P_1 + P_3 - 2P_2)} \, R_0^{-1},$$

où $P_2$ est le niveau du signal de foyer associée à la valeur inverse de distance nulle, $P_3$ est le niveau du signal de foyer associé à la valeur inverse de distance $R_0^{-1}$, $P_1$ est le niveau du signal de foyer associé à la valeur inverse de distance négative $-R_0^{-1}$ et $R_0$ est la distance d'un point focal choisi arbitrairement dans le champ éloigné de l'ensemble (10) de transducteurs.

**9.** Procédé selon la revendication 7 ou 8, **caractérisé en ce que** la distance du point focal réel du premier groupe est choisie de telle sorte qu'il se situe au début du champ éloigné de l'ensemble (10) de transducteurs.

**10.** Procédé selon la revendication 9, **caractérisé en ce qu'**on calcule la distance choisie ($R_0$) en tant que quotient du carré de l'ouverture (L) de l'ensemble de transducteurs et de la longueur d'onde ($\lambda$), soit

$$R_0 = L^2 / \lambda.$$

**11.** Procédé selon l'une quelconque des revendications 1 à 10, **caractérisé en ce que**, pour corriger en fonction de l'angle de relèvement l'éloignement ($R_z$) de la cible pour une direction de relèvement (19) pivotée d'un angle de relèvement ($\theta_z$) par rapport à la normale (32) à l'ensemble (10) de transducteurs, on multiplie la valeur inverse ($R_z^*$) de la valeur inverse de distance ($R_z^{-1}$) associée au maximum par le carré du cosinus de l'angle de relèvement ($\theta_z$).

**12.** Procédé selon la revendication 9, **caractérisé en ce qu'**on détermine l'angle de relèvement ($\theta_z$) au moyen d'une installation radiogoniométrique (13).

**13.** Procédé selon l'une quelconque des revendications 1 à 12, **caractérisé en ce que**, en cas d'utilisation d'un ensemble (10) de transducteurs linéaire, on obtient les temporisations ($\Delta\tau_n$) pour les signaux de réception des transducteurs (11) pour la focalisation sur les points focaux à partir du calcul des temps de propagation ($\tau_n$) pour les distances ($y_n$) entre les transducteurs (11) et un arc de cercle, tiré autour du point focal respectif (20), dont la tangente touche le centre de l'ensemble (10) de transducteurs, conformément à l'équation suivante

$$\tau_n = \frac{x_n^2}{2c.R_k}$$

où $x_n$ est la distance entre le n-ème transducteur et le centre de l'ensemble (10) de transducteurs, $\frac{1}{R_k}$ est la valeur inverse de distance du k-ème point focal (20), et c est la vitesse du son.

**14.** Procédé selon la revendication 13, **caractérisé en ce que**, pour focaliser l'ensemble (10) de transducteurs sur les points focaux virtuels, on soumet les signaux de réception des transducteurs (11) à des temporisations ($\Delta\tau_n$) de même montant et de signe inverse.

**15.** Procédé selon l'une quelconque des revendications 1 à 14, **caractérisé en ce qu'**on estime une erreur aléatoire ($\Delta K$) de la valeur inverse de distance ($R^{-1}$) à partir du rapport signal/parasite ($SNR_B$) du signal de foyer pour le point focal réel, et on détermine à partir d'elle une erreur aléatoire relative ($\Delta R/R$), fonction de la fréquence, de l'éloignement (R) de la cible.

**16.** Procédé selon la revendication 15, **caractérisé en ce que** l'erreur aléatoire relative ($\Delta R/R$) de l'éloignement (R) de la cible est déterminée d'une manière inversement proportionnelle en fonction de la fréquence (f) et de la racine du rapport signal/parasite ($SNR_B$) du signal de foyer.

**17.** Procédé selon la revendication 15 ou 16, **caractérisé en ce que**, en tenant compte du nombre (n) et d'une longueur d'ouverture (L), fonction de l'angle de relèvement, des transducteurs (11) utilisés pour la focalisation, on détermine le rapport signal/parasite ($SNR_B$) du signal de foyer à partir du rapport signal/parasite (SNR) d'un signal reçu par le transducteur (11), multiplié par un produit prédéfinissable du temps et de la largeur de bande.

**18.** Procédé selon l'une quelconque des revendications 15 à 17, **caractérisé en ce qu'**on sélectionne, en fonction de l'allure de l'erreur aléatoire relative ($\Delta R/R$), une ou plusieurs bandes de fréquences pour lesquelles l'erreur ($\Delta R/R$) est inférieure à une limite d'erreur prédéfinissable, et **en ce qu'**on détermine les niveaux (P) des signaux de foyer pour cela.

Fig. 1

Fig. 2

Fig. 3

$$(R_k - y_n)^2 + x_n^2 = R_k^2$$

$$y_n^2 - 2 R_k y_n + x_n^2 = 0$$

$$y_n = R_k - R_k \sqrt{1 - \left(\frac{x_n}{R_k}\right)^2} \qquad \text{(a)}$$

$$R_k \sqrt{1 - \left(\frac{x_n}{R_k}\right)^2} \implies \text{Potenzreihe}$$

$$= R_k \left( 1 - \frac{1}{2}\left(\frac{x_n}{R_k}\right)^2 - \ldots \right)$$

$$= R_k - \frac{x_n^2}{2 R_k} \qquad \text{(b)}$$

(b) in (a)

$$\implies \qquad y_n = \frac{x_n^2}{2 R_k}$$

$$\tau_n = \frac{y_n}{c} = \frac{x_n^2}{2 c R_k} \quad \text{für} \quad n = 0 \text{ bis } N$$

Fig. 4

Fig. 5

EP 1 308 745 B1

Fig. 6

Fig. 7